(19) Europäisches Patentamt
European Patent Office
Office européen des brevets

(11) **EP 3 292 541 B1**

(12) **FASCICULE DE BREVET EUROPEEN**

(45) Date de publication et mention
de la délivrance du brevet:
**20.07.2022  Bulletin 2022/29**

(21) Numéro de dépôt: **16733134.7**

(22) Date de dépôt: **02.05.2016**

(51) Classification Internationale des Brevets (IPC):
***G06T 17/20*** (2006.01)

(52) Classification Coopérative des Brevets (CPC):
**G06T 17/205**

(86) Numéro de dépôt international:
**PCT/FR2016/051030**

(87) Numéro de publication internationale:
**WO 2016/177959 (10.11.2016 Gazette 2016/45)**

(54) **PROCEDE DES SIMPLIFICATION DE MODELE DE GEOMETRIE**

VERFAHREN ZUR SIMPLIFIZIERUNG EINES GEOMETRIEMODELLS

METHOD OF SIMPLIFYING A GEOMETRY MODEL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **07.05.2015  FR 1554109**

(43) Date de publication de la demande:
**14.03.2018  Bulletin 2018/11**

(73) Titulaire: **Institut Mines Telecom
75014 Paris (FR)**

(72) Inventeurs:
• **LEGRAND, Hélène
75013 Paris (FR)**
• **BOUBEKEUR, Tamy
75013 Paris (FR)**

(74) Mandataire: **Nony
11 rue Saint-Georges
75009 Paris (FR)**

(56) Documents cités:
**EP-A2- 2 533 213     US-A1- 2009 109 219**

• **SHAFFER E ET AL: "Efficient adaptive simplification of massive meshes", VISUALIZATION, 2001. VIS '01. PROCEEDINGS, IEEE, PI, 1 janvier 2001 (2001-01-01), pages 127-551, XP031172879, DOI: 10.1109/VISUAL.2001.964503 ISBN: 978-0-7803-7201-6**
• **ANSELM HASELHOFF ET AL: "On filtering by means of generalized integral images: a review and applications", MULTIDIMENSIONAL SYSTEMS AND SIGNAL PROCESSING ; AN INTERNATIONAL JOURNAL, KLUWER ACADEMIC PUBLISHERS, BO, vol. 23, no. 1 - 2, 18 mai 2010 (2010-05-18), pages 291-312, XP019997254, ISSN: 1573-0824, DOI: 10.1007/S11045-010-0112-5**

**Description**

La présente invention concerne le domaine de la modélisation d'objet et notamment le domaine de la simplification de modèles de géométrie (maillage ou nuages de points, par exemple) pour des objets modélisés en trois dimensions.

Lors de la modélisation d'objet en trois dimensions à partir d'objets réels, les modèles de points obtenus ou les modèles de mailles (ex. faces triangulaires) peuvent être présents en très grand nombre (ex. plusieurs millions de mailles / de triangles) pour représenter finement la géométrie de l'objet.

La modélisation en trois dimensions (i.e. 3D) de ces objets réels peut notamment être effectuée à l'aide de techniques utilisant des scanners tridimensionnels. Un scanner tridimensionnel est un appareil qui analyse les objets ou leur environnement proche pour recueillir des informations précises sur la forme et éventuellement sur l'apparence (couleur, texture...) de ceux-ci. Ces scanneurs tridimensionnels peuvent utiliser diverses technologies comme la lumière (ex. laser, lumière structurée, lumière modulée), les ultrasons ou encore les rayons X. Un exemple de scanner tridimensionnel visant le grand public est la tablette Google Tango ou encore le produit Microsoft Kinect. N'importe quel capteur photo est aussi un scanner 3D potentiel, à partir du moment où lui adjoint un programme de stéréovision, reconstruisant une forme 3D à partir d'un série de photos.

Qu'ils soient numérisés ou créés virtuellement, les objets 3D numérique peuvent être de différentes natures et usages, notamment :

- des données urbaines et architecturales (ex. bâtiments),

- des données culturelles (scans de sites archéologiques, scans d'œuvres d'art),

- données massives issues de simulation,

- données extraites d'images médicales,

- données capturées pour des médias visuels comme la prévisualisation en effets spéciaux,

- création de contenus pour les jeux vidéo,

- etc.

Néanmoins, les modèles 3D issus de ces outils de modélisations sont le plus souvent très complexes et donc très lourds. Dès lors, il peut être compliqué de manipuler / de visualiser ces modèles sur des équipements informatiques de faible puissance de calcul (ex. smartphone). En outre, les capacités réseau limitées (ex. réseaux WiFi de faibles qualités, réseaux mobiles) peuvent empêcher de télécharger ces modèles lourds de manière instantanée et commode.

Pour adapter ces modèles à de tels contextes contraints, les méthodes existantes de simplifications géométriques reposent principalement sur deux grandes catégories de techniques :

- des algorithmes de simplification itérative : regroupement de sommets de mailles ou contraction d'arêtes (Hoppe et al. « Mesh optimization » 1993 ou Garland et al. « Surface simplification using quadrics error metrics » 1997) ;
- des algorithmes de partitionnement : partitionnement des mailles en régions (ex. Lindstrom et al. « Out-of-core simplification of large polygonal models » 2000 ou Cohen-Streiner et al. « Variational Shape approximation » 2004).

Ces algorithmes sont relativement lents et peuvent nécessiter une grande consommation de mémoire. Dès lors, leur application sur de grands modèles peut être difficile. De plus, pour certains algorithmes de partitionnement, la convergence des algorithmes peut ne pas être garantie.

US 2009/109219 A1 (DECORO CHRISTOPHER [US] ET AL) 30 avril 2009 (2009-04-30) décrit un procédé de simplification de mailles, EP 2 533 213 A2 (PACIFIC DATA IMAGES LLC [US]) 12 décembre 2012 (2012-12-12) décrit l'utilisation des codes de Morton codes pour gestion des nuages de points avant le rendu.

Il existe ainsi un besoin pour simplifier de manière efficace et réaliste les modèles lourds et complexes que peuvent produire des outils de modélisation 3D.

En outre, il existe également un besoin pour effectuer cette simplification de manière très rapide afin d'être en capacité de simplifier les modèles en quasi temps réel (ex. besoin de réactivité forte en cas de demande de simplification, transmission d'un modèle en mouvement).

Bien entendu, si cette simplification doit être rapide, cette simplification doit également éviter, au maximum, de dégrader la qualité des modèles simplifiés, préservant au mieux la forme d'origine.

La présente invention vient améliorer la situation.

À cet effet, la présente invention propose un procédé de simplification de modèle de géométrie efficace et optimisé pour les calculs parallèles.

Un exemple non revendiqué est un procédé de simplification d'un modèle de géométrie, le procédé comprend :

/a/ réception dudit modèle de géométrie comprenant une pluralité de points, chaque point de la pluralité étant associé à une mesure d'erreur ;
/b/ pour chaque point courant dudit modèle de géométrie,

- détermination d'un code de Morton associé au point courant en fonction de coordonnées dudit point courant ;
- détermination d'une mesure d'erreur intégrale définie comme étant fonction d'une somme des mesures d'erreur associées aux points de la pluralité ayant un code de Morton associé inférieur au code de Morton associé au point courant ;

/c/ détermination si un ensemble donné de points de la pluralité peut être simplifié par un nouveau et un unique point, les points de l'ensemble donné étant tous les points de la pluralité ayant un code de Morton associé avec un même préfixe de longueur donné, en fonction au moins d'une différence entre :

- la mesure d'erreur intégrale déterminée pour le point de l'ensemble donné ayant le code de Morton le plus grand ; et
- la mesure d'erreur intégrale déterminée pour le point de la pluralité ayant un code de Morton immédiatement inférieur au code de Morton le plus petit parmi les codes de Morton associés aux points de l'ensemble.

Un « modèle de géométrie » peut être par exemple un maillage ou un nuage de point. Par soucis de simplicité, par la suite, le terme de « maillage » est utilisé à la place de « modèle de géométrie ».

Le plus souvent, les « mesures d'erreur » sont représentées à l'aide d'une fonction, d'une matrice (ex. 4x4) représentant une quadrique. À partir d'une mesure d'erreur donnée, il est possible de calculer une valeur d'erreur ($\epsilon$).

Bien entendu, les termes « inférieur », « le plus grand », « le plus petit » sont à interpréter en fonction d'une relation d'ordre donnée (au sens mathématique). Dès lors, la terminologie « inférieur » au sens de cette relation d'ordre peut très bien signifier « supérieur » au sens de la relation d'ordre dit « naturelle » (i.e. celle à laquelle nous sommes habitués, ex. 1 <2). Ainsi, la relation d'ordre donnée peut être la relation d'ordre dit « naturelle» (i.e. 001100<110101) ou être l'inverse de cette relation d'ordre dit « naturelle » (i.e. 001100>110101).

Comme il le sera expliqué ci-dessous, il est possible d'effectuer la détermination de l'étape /c/ en identifiant le nœud parent commun à l'ensemble de points dans un arbre k-d.

En outre, la mesure d'erreur associée à un point courant de la pluralité peut être fonction d'une quadrique représentative de mailles du modèle dont au moins un des sommets est ledit point courant ou est à une distance inférieure à une distance prédéterminée dudit point courant.

La distance prédéterminée peut être choisie inférieure à une dimension des mailles (ex. 30% de la dimension la plus petite parmi les mailles du modèle ou parmi des mailles proches dans le modèle).

Dans un mode de réalisation particulier, la mesure d'erreur associée à un point courant de la pluralité peut être fonction de couleur de mailles du modèle dont au moins un des sommets est ledit point courant.

Cette prise en compte de la couleur dans la détermination de la mesure d'erreur peut permettre d'éviter des simplifications trop importantes dans des zones du maillage ayant des changements de couleur importants.

En complément ou en variante, la mesure d'erreur associée à un point courant de la pluralité peut être fonction d'une quadrique représentative d'un vecteur normal associé audit point courant.

Cette prise en compte de vecteurs normaux dans la détermination de la mesure d'erreur peut permettre d'éviter des simplifications trop importantes dans des zones du maillage ayant des motifs géométriques importants, mais de faibles amplitudes (ex. zone comportant des cheveux, ou une zone comportant des structures en fibres, etc.).

En outre, le procédé peut comprendre:

- si un premier point de la pluralité est associé à un code de Morton identique à un deuxième point de la pluralité, suppression de la pluralité de points ledit deuxième point.

Ainsi, il est possible de dédupliquer des points du maillage très proches. En effet, le code de Morton associé peut avoir une précision plus faible que la précision des coordonnées de l'espace (i.e. le nombre de bits utilisés pour le code de Morton est inférieur à trois fois le nombre de bits utilisés pour chacune des coordonnées). Dès lors, deux points différents du modèle peuvent avoir un même code de Morton.

Dans un mode de réalisation, ledit nouveau point peut être fonction des points de l'ensemble. Par exemple, ce nouveau point peut être un barycentre (éventuellement pondéré) des points de cet ensemble.

En complément ou en variante, ledit nouveau point peut être déterminé par une minimisation d'une valeur fonction de ladite différence. Par exemple, si la différence est une quadrique Q et si le nouveau point est noté p, il est possible de minimiser $(p,1)^T Q(p,1)$. Cette minimisation peut être itérative (i.e. modification de la valeur de p de nombreuses fois pour tendre vers une valeur minimale), formelle (i.e. résolution d'une équation de minimisation) ou même semi-formelle (résolution d'une équation donnant un résultat proche de la minimisation).

Par ailleurs, le procédé peut comprendre en outre :

- détermination d'un arbre k-d sur la base d'un codage de Morton, ledit arbre ayant comme feuilles ladite pluralité de points.

La détermination d'un tel arbre permet de simplifier la mise en œuvre informatique du procédé décrit ci-dessus et de faciliter une implémentation en calcul parallèle. Dès lors, le procédé peut être décrit par des parcours d'arbres, parcours qu'il est possible d'optimiser pour favoriser les allocations statiques de mémoire (ex. ne conserver en mémoire que les index initiaux (ini) et finaux (las) des nœuds feuilles à regrouper plutôt que la liste des nœuds à regrouper, etc.).

Ainsi, ledit arbre k-d possédant des nœuds internes, chaque nœud interne peut être associé à un point. La détermination de l'étape /c/ peut être également fonction dudit point et d'une transposée dudit point.

Dans un mode de réalisation, la mesure d'erreur intégrale pour chaque point courant peut être calculée comme étant fonction d'une somme :

- de la mesure d'erreur intégrale d'un point ayant un code de Morton immédiatement plus petit que le code de Morton du point courant ;

- de la mesure d'erreur dudit point courant.

Ainsi, le nombre d'opérations nécessaire pour le calcul de chaque mesure d'erreur intégrale est limité à une seule opération mathématique.

Si aucun point ayant un code de Morton immédiatement plus petit que le code de Morton du point courant n'existe (i.e. le point courant a un code de Morton le plus petit), alors la mesure d'erreur intégrale est simplement la mesure d'erreur dudit point courant. Cela revient à considérer que « la mesure d'erreur intégrale d'un point ayant un code de Morton immédiatement plus petit que le code de Morton du point courant » est égale à l'élément nul (noté « 0 », mais correspondant éventuellement à une quadrique/matrice nulle).

La présente invention vise un dispositif destiné à simplifier de manière efficace un de modèle de géométrie. Le dispositif comprend :

/a/ une interface pour une réception dudit modèle de géométrie comprenant une pluralité de points, chaque point de la pluralité étant associé à une mesure d'erreur ;
/b/ un circuit adapté pour, pour chaque point courant dudit modèle de géométrie :

- une détermination d'un code de Morton associé au point courant en fonction de coordonnées dudit point courant ;
- une détermination d'une mesure d'erreur intégrale définie comme étant fonction d'une somme des mesures d'erreur associées aux points de la pluralité ayant un code de Morton associé inférieur au code de Morton associé au point courant ;

/c/ un circuit adapté pour une détermination si un ensemble donné de points de la pluralité peut être simplifié par un nouveau point, les points de l'ensemble donné étant tous les points de la pluralité ayant un code de Morton associé avec un même préfixe de longueur donné, en fonction au moins d'une différence entre :

- la mesure d'erreur intégrale déterminée pour le point de l'ensemble donné ayant le code de Morton le plus grand ; et
- la mesure d'erreur intégrale déterminée pour le point de la pluralité ayant un code de Morton immédiatement inférieur au code de Morton le plus petit parmi les codes de Morton associés aux points de l'ensemble.

Un programme informatique, mettant en œuvre tout ou partie du procédé décrit ci-avant, installé sur un équipement préexistant, est en lui-même avantageux, dès lors qu'il permet une simplification efficace de modèle de géométrie.

Ainsi, la présente invention vise également un programme informatique selon la revendication 1.

Ce programme peut utiliser n'importe quel langage de programmation (par exemple, un langage orienté objet ou autre), et être sous la forme d'un code source interprétable, d'un code partiellement compilé ou d'un code totalement compilé.

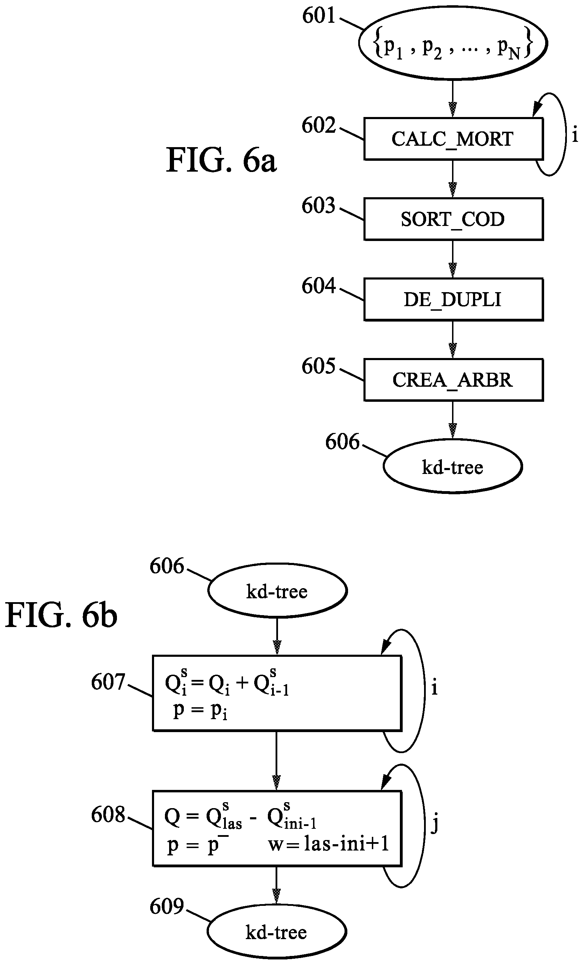

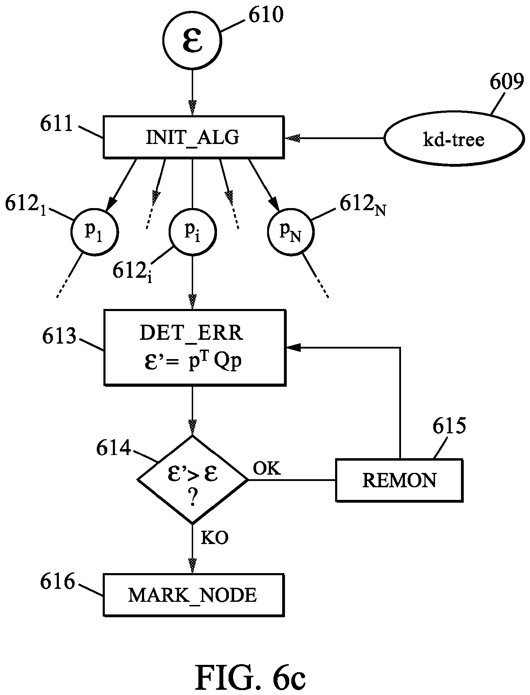

Les figures 6a, 6b et 6c décrites en détail ci-après, peuvent former l'organigramme de l'algorithme général d'un tel programme informatique.

D'autres caractéristiques et avantages de l'invention apparaîtront encore à la lecture de la description qui va suivre. Celle-ci est purement illustrative et doit être lue en regard des dessins annexés sur lesquels :

- la figure 1a illustre un exemple de codage des coordonnées d'un point selon un codage de Morton ;
- la figure 1b illustre un exemple de troncation d'un codage de Morton ;
- la figure 2 présente un exemple d'arbre k-d représentatif de différents points d'un modèle selon un codage de Morton ;
- la figure 3 représente le calcul de quadriques dans un modèle 2D permettant le calcul d'erreurs géométriques dans ce modèle ;
- la figure 4 représente le calcul de quadriques dans un modèle 3D permettant le calcul d'erreurs géométriques dans ce modèle ;
- la figure 5 représente le calcul d'intégrales de quadriques pour le calcul de quadriques pour des nœuds internes de l'arbre k-d ;
- la figure 6a présente un exemple d'ordinogramme pour la création de l'arbre k-d ;
- la figure 6b présente un exemple d'ordinogramme pour le calcul de quadriques pour des nœuds internes de l'arbre k-d ;
- la figure 6c est un exemple d'ordinogramme pour l'identification des nœuds à conserver pour le modèle simplifié ;
- la figure 7 est un exemple d'arbre k-d dans lequel certains nœuds ont été sélectionnés pour être conservés dans le modèle simplifié ;
- la figure 8a et la figure 8b sont des exemples de modèles simplifiés obtenus à l'aide de différents algorithmes ;
- la figure 9 représente un exemple de dispositif de simplification de maillage dans un mode de réalisation de l'invention.

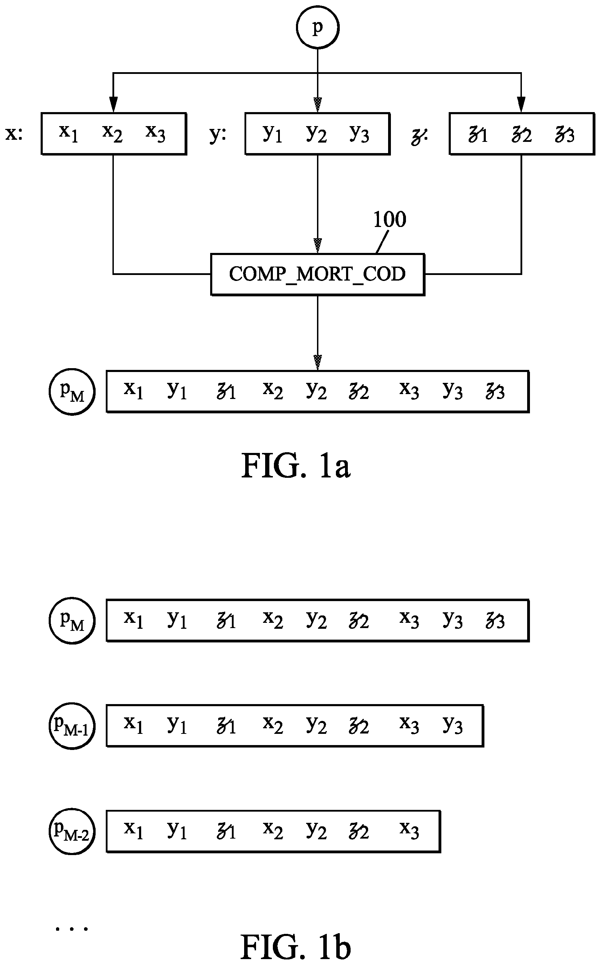

La figure 1a illustre un exemple de codage d'une coordonnée d'un point selon un codage de Morton.

Le codage de Morton est un codage permettant de représenter avec un unique entier un ensemble de coordonnées.

À titre d'illustration, si un point **p** est associé à un ensemble de trois coordonnées (x,y,z) dans un espace E, il est possible de représenter ces coordonnées à l'aide d'un entier $p_M$ représentatif d'un code de Morton ($p_M$ est appelé « code de Morton » de p).

Il est supposé ici que la valeur de x s'exprime en binaire sous la forme de trois bits $x_1$ $x_2$ $x_3$ (avec $x_1$ la valeur du premier bit de x, $x_2$ la valeur du deuxième bit de x, et $x_3$ la valeur du troisième bit de x). De même, il est supposé que la valeur de y s'exprime en binaire sous la forme de trois bits $y_1$ $y_2$ $y_3$ (avec $y_1$ la valeur du premier bit de y, $y_2$ la valeur du deuxième bit de y, et $y_3$ la valeur du troisième bit de y). Enfin, il est supposé que la valeur de z s'exprime en binaire sous la forme de trois bits $z_1$ $z_2$ $z_3$ (avec $z_1$ la valeur du premier bit de z, $z_2$ la valeur du deuxième bit de z, et $z_3$ la valeur du troisième bit de z).

Dès lors, le code de Morton des coordonnées de **p** peut être calculé (étape 100) en concaténant successivement le premier bit de x, puis le premier bit de y, le premier bit de z. La concaténation est poursuivie en prenant les deuxièmes bits de chaque coordonnée et ainsi de suite. Dans l'exemple de la figure 1a, la valeur de $p_M$ pourra s'écrire en binaire comme étant : $x_1$ $y_1$ $z_1$ $x_2$ $y_2$ $z_2$ $x_3$ $y_3$ $z_3$.

Ainsi, si deux points ont un code de Morton proche (notamment sur les premiers bits), ces points seront en général proches dans l'espace E. La réciproque n'est pas nécessairement vraie.

La figure 1b illustre un exemple de troncations d'un codage de Morton.

On appelle « code de Morton tronqué d'ordre 1 » la valeur d'un code de Morton $p_M$ dont le dernier bit est supprimé / ignoré. On note cette valeur $p_{M-1}$.

On appelle « code de Morton tronqué d'ordre N » (avec N un entier naturel) la valeur d'un code de Morton $p_M$ dont les N derniers bits sont supprimés / ignorés. On note cette valeur $P_{M-N}$.

Ainsi, si le code de Morton $p_M$ est $x_1$ $y_1$ $z_1$ $x_2$ $y_2$ $z_2$ $x_3$ $y_3$ $z_3$ en binaire, alors $p_{M-1}$ est $x_1$ $y_1$ $z_1$ $x_2$ $y_2$ $z_2$ $x_3$ $y_3$ et $p_{M-2}$ est $x_1$ $y_1$ $z_1$ $x_2$ $y_2$ $z_2$ $x_3$.

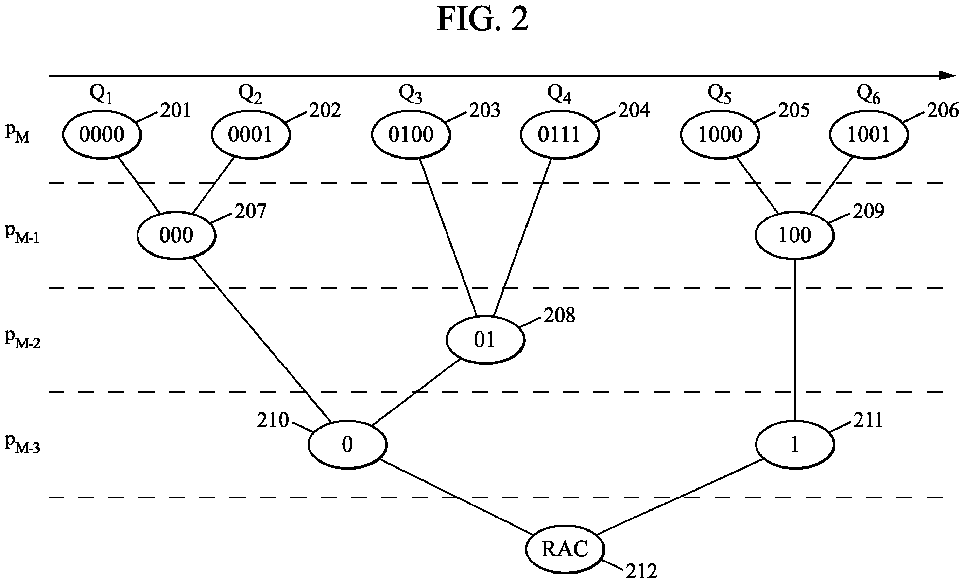

La figure 2 présente un exemple d'arbre k-d représentatif de différents points d'un modèle selon un codage de Morton.

Un arbre k-d (ou « kd-tree » en anglais pour « k-dimensional tree ») est arbre binaire dans lesquels chaque nœud contient un point en dimension k. Chaque nœud « non terminal » (ou encore « non-feuille » ou « interne ») divise l'espace en deux demi-espaces.

Dans l'exemple de la figure 2, les nœuds « feuilles » sont les nœuds 201 à 206. Ces nœuds sont associés chacun à un point du modèle dans l'espace E et à un code de Morton de ce point comme décrit précédemment. Par exemple, le point 201 possède le code de Morton « 0000 » et le nœud 204 possède le code de Morton « 0111 ».

Afin de faciliter le processus décrit ci-dessous, les nœuds « feuilles » sont classés par ordre croissant de gauche à droite selon leur code de Morton. Il est tout à fait possible de classer ces nœuds selon un autre ordre (ex. décroissant).

Bien entendu, la précision du code de Morton peut être plus faible que la précision des coordonnées du modèle. Dès lors, il est possible que deux nœuds « feuilles » soient associés au même code de Morton : dans cette hypothèse, il suffit de parcourir les nœuds « feuilles » classés et si un doublon est détecté, ces deux nœuds (consécutifs puisque les nœuds feuilles sont classés) sont alors combinés en un seul nœud.

On appelle « nœud parent » / « internes » un nœud de l'arbre n'étant pas un nœud feuille. Tous les nœuds parents sont internes. Par exemple, le nœud 209 est le nœud parent des deux nœuds feuilles 205 et 206 et le nœud 211 est le nœud parent du nœud parent 209.

On appelle « nœud descendant d'un nœud donné » un nœud associé à un code de Morton ayant comme préfixe le code de Morton du nœud donné. Ainsi, le nœud 205 est un nœud descendant du nœud 209 ou encore du nœud 211.

On appelle « nœud fils d'un nœud donné » un nœud descendant dudit nœud donné et directement connecté dans l'arbre k-d. Ainsi, le nœud 205 est un nœud fils du nœud 209, mais n'est pas un nœud fils du nœud 211.

On appelle « nœud feuille descendant d'un nœud donné » un nœud descendant du nœud donné, ce nœud descendant étant de plus un nœud « feuille ». Un nœud « feuille » n'a pas de fils.

Les nœuds parents correspondent à un code de Morton tronqué : ce code de Morton est le plus long préfixe commun aux nœuds « descendants». Ainsi, le nœud « parent » 207 possède deux « descendants» 201 et 202 et correspond au code de Morton « 000 » (i.e. le code de Morton tronqué d'ordre 1 du code de Morton associé au nœud 201 ou au nœud 202). De la même manière, le nœud parent 208 possède deux descendants 203 et 204 et correspond au code de Morton « 01 » (i.e. le code de Morton tronqué d'ordre 2 du code de Morton associé au nœud 203 ou au nœud 204, le code de Morton tronqué d'ordre 1 du code de Morton associé au nœud 203 et au nœud 204 étant différent).

Le nœud « racine » 212 n'est associé à aucun code de Morton, mais représente la terminaison de l'arbre associant les deux nœuds de l'arbre n'ayant pas de parents.

Afin de permettre à un algorithme de parcourir efficacement l'arbre k-d, il est possible de définir pour chaque nœud de l'arbre (hors nœuds « feuilles »), les nœuds « descendants» (divisant l'espace en deux au maximum).

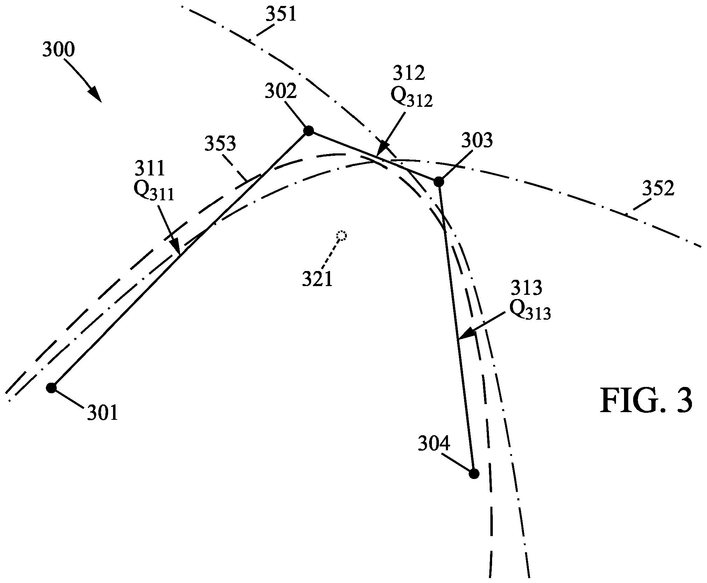

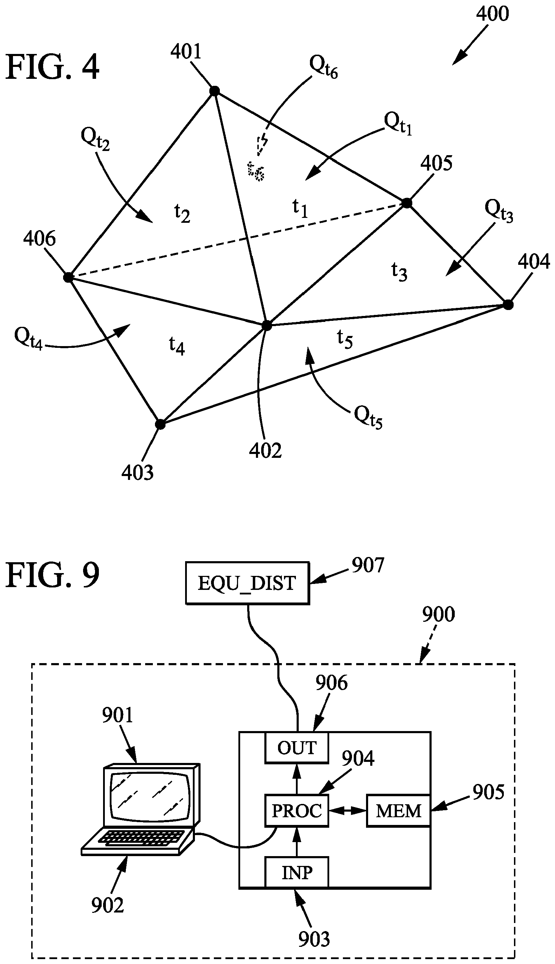

En outre, il est possible de définir pour chaque nœud feuille i une quadrique $Q_i$ permettant de quantifier une erreur géométrique associée à ce nœud i. Pour les nœuds « feuilles », cette quadrique $Q_i$ peut être déterminée en s'inspirant de l'algorithme présenté par Michael Garland et al. (1997, Surface Simplification Using Quadric Error Metrics, section 5) et de la manière décrite en relation avec la Figure 3 et 4. Essentiellement, cette quadrique donne, en tout point de l'espace, le carré de la distance à un plan (ex : plan de support d'un triangle, ou plan défini par un point et sa normale).

La figure 3 représente le calcul de quadriques dans un modèle 2D permettant le calcul d'erreurs géométriques dans ce modèle.

Pour chaque nœud feuille i, il est possible de déterminer une quadrique $Q_i$ sous la forme d'une matrice symétrique de dimensions 4x4.

Par exemple, pour calculer la quadrique associée au nœud 302, on calcule les quadriques des faces du maillage ayant parmi leurs sommets le point associé au nœud 302 : dans le cas de la figure 3 (le modèle étant 2D) la quadrique de la face plane 311 (i.e. $Q_{311}$) et la quadrique de la face plane 312 (i.e. $Q_{312}$) sont calculées.

Si une face plane est décrite par l'équation $ax + by + cz + d = 0$ ou par le vecteur $[a, b, c, d]^T$, alors la quadrique associée à cette face sera de la forme :

$$Q = \begin{bmatrix} a^2 & ab & ac & ad \\ ab & b^2 & bc & bd \\ ac & bc & c^2 & cd \\ ad & cd & cd & d^2 \end{bmatrix}$$

Par ailleurs, pour un point $v$ donné de l'espace, le carré de la distance de ce point à la quadrique (ou au plan dans le cadre d'un plan) est donné par la formule :

$$(v,1)^T Q (v,1) = (v,1)^T \begin{bmatrix} q_{11} & q_{12} & q_{13} & q_{14} \\ q_{12} & q_{22} & q_{32} & q_{24} \\ q_{13} & q_{32} & q_{33} & q_{34} \\ q_{14} & q_{42} & q_{34} & q_{44} \end{bmatrix} (v,1)$$

$(v, 1)$ est un vecteur de taille 4 comprenant les trois coordonnées du point $v$ suivi du chiffre 1. Cette notation permet d'écrire le point $v$ dans des coordonnées homogènes.

En outre, la somme de quadriques étant une quadrique, il est possible d'associer au nœud 302 la quadrique $Q_{302}$ définie comme étant la somme des quadriques des faces du maillage ayant comme sommet au moins le point associé au nœud 302, c'est-à-dire dans cet exemple $Q_{302} = Q_{311} + Q_{312}$. La quadrique $Q_{302}$ peut se représenter par la courbe 352.

De la même manière, il est possible d'associer au nœud 303 la quadrique $Q_{303}$ définie comme étant la somme des quadriques des faces du maillage ayant comme sommet au moins le point associé au nœud 303, c'est-à-dire dans cet exemple $Q_{303} = Q_{312} + Q_{313}$. La quadrique $Q_{303}$ peut se représenter par la courbe 351.

À supposer que les deux points 302 et 303 représentent deux points de l'arbre k-d ayant un même parent, il peut être souhaitable de calculer la quadrique associée à ce parent (i.e. $Q_{parent}$). Il serait envisageable de calculer cette quadrique $Q_{parent}$ comme étant la somme des quadriques des faces ayant comme sommet un point associé à un nœud « feuille » descendant i.e. associé au nœud 302 ou au nœud 303, i.e. :

- $Q_{parent} = Q_{311} + Q_{312} + Q_{313}$ (si chaque quadrique est comptabilisée une seule fois dans la somme) ou
- $Q_{parent} = Q_{311} + 2.Q_{312} + Q_{313}$ (si chaque quadrique est comptabilisée autant de fois dans la somme que le nombre de nœuds « feuilles » sommet de la face associée à cette quadrique).

La quadrique $Q_{parent}$ peut être représentée par la courbe 353.

Par ailleurs, pour les nœuds internes (i.e. les nœuds non « feuilles »), il est possible d'associer un point dit « représentatif » $v$. Ce point « représentatif » peut être, pour un nœud parent donné :

- un point $v$ de l'espace minimisant la quadrique associé (i.e. minimisant $(v, 1)^T Q(v, 1)$, $Q$ étant la quadrique associée

$$(v, 1) = \begin{bmatrix} q_{11} & q_{12} & q_{13} & q_{14} \\ q_{12} & q_{22} & q_{32} & q_{24} \\ q_{13} & q_{32} & q_{33} & q_{34} \\ 0 & 0 & 0 & 1 \end{bmatrix}^{-1} \begin{bmatrix} 0 \\ 0 \\ 0 \\ 1 \end{bmatrix} \quad \text{si}$$

au noeud parent). Cela est possible en résolvant $\begin{bmatrix} q_{11} & q_{12} & q_{13} & q_{14} \\ q_{12} & q_{22} & q_{32} & q_{24} \\ q_{13} & q_{32} & q_{33} & q_{34} \\ 0 & 0 & 0 & 1 \end{bmatrix}$ est inversible (la matrice $Q' = \begin{bmatrix} q_{11} & q_{12} & q_{13} & q_{14} \\ q_{12} & q_{22} & q_{32} & q_{24} \\ q_{13} & q_{32} & q_{33} & q_{34} \\ 0 & 0 & 0 & 1 \end{bmatrix}$ étant donc fonction de la quadrique $Q$, les trois premières lignes étant identiques) ;

$$(v, 1) = Q_{pseudo} \begin{bmatrix} 0 \\ 0 \\ 0 \\ 1 \end{bmatrix} \quad \text{avec}$$

- si la matrice précédente n'est pas inversible, un point $v$ de l'espace satisfaisant $Q_{pseudo}$ une matrice carrée 4x4 pseudo-inverse de la matrice $Q'$ calculée, par exemple, à l'aide d'une décomposition en valeurs singulières ou en valeurs propres.
- si la matrice $Q'$ n'est pas inversible et/ou si un mode de réalisation le prévoit, un point $v$ de l'espace choisi comme étant une fonction des points associés aux nœuds « feuilles » descendant de ce nœud parent donné (ex. un barycentre éventuellement pondéré des points 302 et 303). En outre ce point $v$ peut être également fonction de points voisins des points associés aux nœuds feuilles descendants de ce nœud parent donné (ex. un barycentre éventuellement pondéré des points 302, 303, 301 et 304, le point 301 partageant une face avec le point 302 et le point 304 partageant une face avec le point 304).

À titre d'illustration, le point « représentatif » associé au nœud parent des deux nœuds descendants 302 et 303 peut être le point 321.

Néanmoins, cette heuristique nécessite, pour chaque nœud parent de l'arbre k-d, de parcourir l'arbre jusqu'aux nœuds « feuilles » descendants de ce nœud parent, d'identifier les faces du maillage ayant comme sommet au moins un de ces nœuds feuilles, de déterminer les quadriques associées, de calculer n sommes (n entier, n pouvant être important en fonction du nombre de quadriques déterminées), etc.

Ainsi, cette heuristique peut être très complexe ( $2^{nbit}(n_{bit} - 1)$ opérations unitaires, $n_{bit}$ étant ici le nombre de bit du code de Morton le plus long) et fortement itératif dans le cas de maillage important (i.e. d'arbre k-d important).

De plus, pour réaliser cette heuristique, il peut être utile, pour une implémentation informatique, d'allouer dynamiquement des blocs mémoires pour la sauvegarde de chacune des quadriques des nœuds feuilles descendants avant la réalisation de la somme. L'allocation dynamique de mémoire n'est pas efficace d'un point de vue algorithmique dans un contexte parallèle. Il n'est pas possible d'allouer de manière statique de la mémoire ici, car le nombre de quadriques à considérer pour le calcul de la quadrique du nœud parent n'est pas connu en avance et il n'est pas envisageable d'allouer de manière statique une mémoire correspondant au plus grand nombre de nœuds feuilles descendants possibles sous peine de saturer la mémoire.

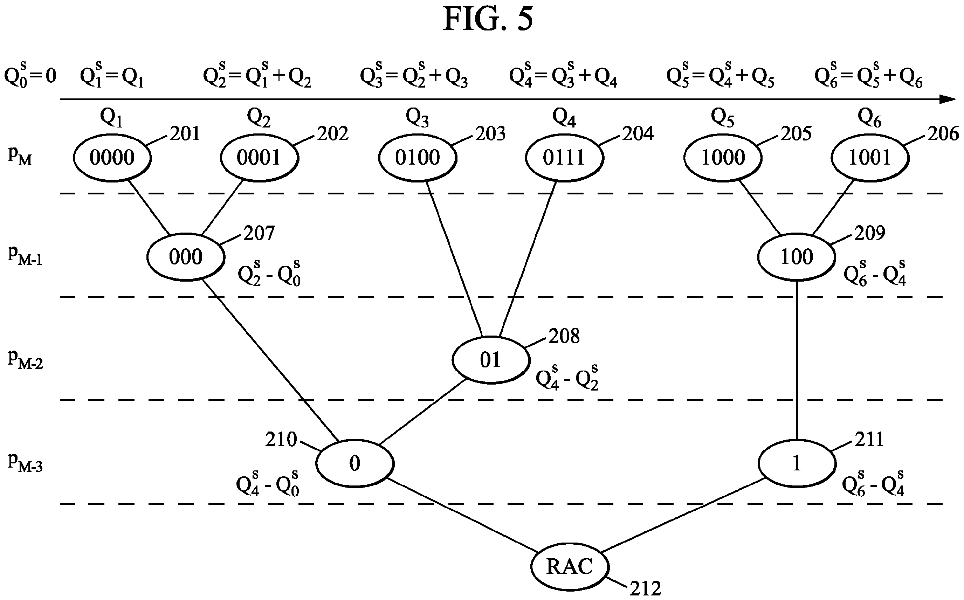

Cette heuristique n'est donc pas adaptée à un calcul parallèle performant. Une heuristique améliorée est présentée en relation avec les figures 5 et 6.

La figure 4 représente le calcul de quadriques dans un modèle 3D permettant le calcul d'erreurs géométriques dans ce modèle.

Dans le cas d'un maillage 3D 400, la description faite en relation avec la Figure 3 peut être généralisée sans difficulté.

En particulier, pour un nœud 401 du maillage, il est possible de prendre en compte les quadriques associées aux faces adjacentes de ce point 401 (i.e. les faces $t_1$, $t_2$ et $t_6$) : ainsi la quadrique associée au point 401 peut être $Q_{t1}+Q_{t2}+Q_{t6}$. Pour un nœud 402 du maillage, il est possible de prendre en compte les quadriques associées aux faces adjacentes de ce point 402 (i.e. les faces $t_1$, $t_2$, $t_3$, $t_4$ et $t_5$) : ainsi la quadrique associée au point 402 peut être $Q_{t1}+Q_{t2}+Q_{t3}+Q_{t4}+Q_{t5}$.

Pour le nœud parent des deux nœuds 401 et 402 (à supposer que ces deux nœuds feuilles aient le même parent), la quadrique Q associée peut être $Q_{t1}+ Q_{t2}+Q_{t3}+Q_{t4}+Q_{t5}+Q_{t6}$ ou encore $2Q_{t1}+ 2Q_{t2}+Q_{t3}+Q_{t4}+Q_{t5}+Q_{t6}$.

Par ailleurs, le point « représentatif » à ce nœud parent peut être, comme précédemment, un point minimisant la quadrique Q (via une inversion ou une pseudo-inversion d'une matrice fonction de la matrice Q) ou un point fonction des points 401 et 402 (ou encore fonction des points 401 à 406).

La figure 5 représente le calcul d' « intégrales » de quadriques pour le calcul de quadriques pour des nœuds internes de l'arbre k-d.

Comme indiqué ci-dessus, il peut être complexe et lourd de déterminer les quadriques des nœuds internes à l'arbre k-d.

Pour simplifier le processus de calcul de ces quadriques, une fois que les nœuds « feuilles » ont été triés selon leur code de Morton (voir Figure 2, les nœuds ayant un index i reflétant cet ordre), il est possible de suivre l'algorithme suivant :

- initialiser la valeur de $Q_0^S$ à 0 ;

- pour chaque nœud i pris dans l'ordre croissant ou décroissant selon le code de Morton, calculer la valeur $Q_i^S$ associée à ce nœud i, $Q_i^S$ étant égale à $Q_{i-1}^S + Q_i$ ($Q_i$ étant la quadrique associée à ce nœud, voir Figure 2).

On appelle $Q_i^S$ la « quadrique intégrale » associée au nœud i.

Si $Q_{i-1}^S$ n'est pas définie, on peut considérer que sa valeur est nulle.

Ces quadriques intégrales permettent de calculer de manière très simple n'importe quelle quadrique associée à un nœud interne par la simple connaissance de son nœud feuille descendant ayant le code de Morton le plus petit parmi les nœuds feuille descendant (d'index $i_{min}$) et de de son nœud feuille descendant ayant le code de Morton le plus grand parmi les nœuds feuille descendant (d'index $i_{max}$) : en effet, la valeur de la quadrique de ce nœud interne peut être calculée comme la différence de $Q_{i_{max}}^S$ et de $Q_{i_{min}-1}^S$. Ainsi, la valeur de la quadrique du nœud 207 est $Q_2^S - Q_0^S$, la valeur de la quadrique du nœud 208 est $Q_4^S - Q_2^S$, la valeur de la quadrique du nœud 211 est $Q_6^S - Q_4^S$, la valeur de la quadrique du nœud 210 est $Q_4^S - Q_0^S$, etc.

Cette heuristique permet de ne réaliser qu'une seule opération mathématique (i.e. différence de matrices 4x4) pour chacun des nœuds internes. Dès lors, seulement $2^{nbit+1} - 1$ opérations mathématiques unitaires sont nécessaires au maximum ($n_{bit}$ étant ici le nombre de bit du code de Morton le plus long) pour calculer l'ensemble des quadriques des nœuds internes. De plus, pour chaque nœud, il n'est nécessaire de n'accéder en mémoire qu'à deux nœuds descendants feuilles (i.e. celui d'index $i_{max}$ et celui d'index $i_{min}$). Dès lors, aucune allocation dynamique de mémoire n'est nécessaire ce qui renforce l'efficacité de l'algorithme. De plus, le calcul de la quadrique associée à un nœud ne nécessite pas le calcul préalable des quadriques associées à tous ses descendants : seuls les nœuds descendants feuilles dépendant de ce nœud doivent avoir leur quadrique initialisée (i.e. calculée).

La figure 6a présente un exemple d'ordinogramme pour la création de l'arbre k-d.

Lors de la réception des N points {$p_1, p_2, ..., p_N$} du maillage (601) décrivant le modèle, il est possible de convertir les coordonnées de ces points en code de Morton comme décrit en relation avec la Figure 1a (étape 602).

Une fois un code de Morton associé à chacun de ces points, il est possible d'ordonner ces points (ou nœuds feuilles) en fonction de ce code de Morton associé comme décrit en relation avec la Figure 2 (étape 603).

Si deux nœuds feuilles possèdent deux codes de Morton identiques (du fait de la résolution finie utilisée pour le code de Morton), il est possible de dédupliquer ces nœuds en les combinant en un seul nœud feuille (étape 604).

Ensuite, il est possible de créer un arbre k-d (606) sur la base des nœuds feuilles ordonnés comme cela est décrit en relation avec la Figure 2 (étape 605). Il est tout à fait possible de remplacer l'arbre k-d par un arbre de type « octree » (un arbre pouvant avoir jusqu'à 8 fils).

La figure 6b présente un exemple d'ordinogramme pour le calcul de quadriques pour des nœuds internes de l'arbre k-d.

Une fois l'arbre k-d déterminé, il est possible d'associer (étape 607) à chaque nœud feuille i de l'arbre (i étant un indice du nœud feuille dans l'ordre de Morton) :

- $p$ : les coordonnées des points correspondant au code de Morton associé ;

- $Q$ : une quadrique $Q_i$ calculée comme décrit en relation avec la figure 3 ou 4 ;

- $Q^S$ : une quadrique intégrale $Q_i^S$ calculée comme décrit en relation avec la figure 5 (i.e. $Q_i^S = Q_i + Q_{i-1}^S$).

Pour des raisons d'efficacité algorithmique, il est possible de stocker les valeurs de la quadratique intégrale dans un tableau pour lequel chaque valeur de $Q_i^S$ est accessible grâce à l'index i. En effet, les valeurs de la quadratique intégrale peuvent être régulièrement accédées (voir ci-dessous).

En outre, il est possible d'associer (étape 608) à chaque nœud interne j de l'arbre 606 :

- *ini* : un index d'un nœud feuille descendant ayant le plus petit index. Cette valeur peut être simplement calculée comme étant la valeur minimale entre les valeurs *ini* des nœuds fils du nœud interne courant si ces nœuds fils sont également des nœuds internes ;

- *las* : un index d'un nœud feuille descendant ayant le plus grand index. Cette valeur peut être simplement calculée comme étant la valeur maximale entre les valeurs *las* des nœuds fils du nœud interne courant si ces nœuds fils sont également des nœuds internes ;

- $Q$ : une quadrique $Q_j$ calculée comme une fonction de la différence :
  - entre la quadrique intégrale $Q_{ini-1}^S$ ,
  - et la quadrique intégrale $Q_{las}^S$ ;

- $\hat{p}$ : les coordonnées d'un point minimisant ladite quadrique $Q_j$ (si le calcul est possible) ;

- w : le nombre de nœuds feuilles descendants dépendant du nœud interne courant. On appelle également ce nombre « poids ». Cette valeur peut être simplement calculée comme étant la somme des valeurs w des nœuds fils du nœud interne courant si ces nœuds fils sont également des nœuds internes ou comme *las - ini* + 1 ;

- $\acute{p}$ : les coordonnées d'un point « moyen » représentant un barycentre des points p des nœuds feuilles descendants dépendant de ce nœud interne. Il est possible de calculer efficacement ce point moyen en calculant un barycentre des points « moyens » $\acute{p}$ pondérés par des nombres w pour les nœuds fils du nœud interne courant (ex. en référence à la figure 5, $\acute{p}_{210} = \frac{w_{207}}{w_{207}+w_{208}}\acute{p}_{207} + \frac{w_{208}}{w_{207}+w_{208}}\acute{p}_{208}$). Si les nœuds fils du nœud interne courant sont des nœuds feuilles, leur nombre w peut être considéré comme étant 1 et leur point moyen associé peut être considéré comme étant le point p (ex. en référence à la figure 5, $\acute{p}_{208} = \frac{1}{2}p_{203} + \frac{1}{2}p_{204}$).

Les nœuds de l'arbre k-d 609 sont ainsi enrichis d'informations complémentaires.

La figure 6c est un exemple d'ordinogramme pour l'identification des nœuds à conserver pour le modèle simplifié.

Si une valeur d'erreur $\epsilon$ (610) est indiquée, il est possible d'initialiser (étape 611) l'algorithme d'identification des nœuds à conserver pour le modèle simplifié.

Pour ce faire, il est possible de lancer N processus de calculs en parallèle (N étant le nombre de nœuds feuilles de l'arbre k-d), chaque processus i de calculs en parallèle étant associé à un nœud feuille $p_i$ ($612_1$, ... $612_i$, ..., $612_N$).

Ces processus de calculs en parallèle vont parcourir l'arbre du nœud racine jusqu'au nœud associé $\{p_i\}$ à moins d'être « terminés » avant d'y arriver (voir ci-dessous). Par exemple, si un processus est associé au nœud 202 de la Figure 2, ce processus parcourra les nœuds 212, 210, 207, et 202. Si un processus est associé au nœud 204 de la Figure 2, ce processus parcourra les nœuds 212, 210, 208, et 204.

Bien entendu, dans ce mode de réalisation, certains processus parcourront les mêmes nœuds, mais il a été constaté que d'essayer de limiter ce multiple parcours peut être défavorable, dans de multiples situations, pour l'efficacité algorithmique du processus global.

Pour chaque processus de calculs en parallèle, le processus est positionné sur le nœud racine de l'arbre k-d 609 (il est rappelé que ce nœud n'est pas associé à un code de Morton), puis remonte d'un nœud en direction du nœud feuille associé au processus. Le nœud sur lequel le processus est positionné est appelé « nœud courant du processus ».

Pour le nœud courant du processus, il est déterminé une valeur d'erreur $\epsilon'$ (étape 613). Cette valeur d'erreur $\epsilon'$ est calculée comme étant $\epsilon' = \{\hat{p}, 1)Q(\hat{p}, 1)^T$ si un point $\hat{p}$ est défini pour ce nœud (voir ci-dessous la description en relation avec la figure 6b) ou comme étant $\epsilon' = (\rho, 1)Q(p, 1)^T$ si le point $\hat{p}$ n'est pas défini pour ce nœud (ex. la résolution permettant de calculer $\hat{p}$ n'est pas possible) ou si un mode de réalisation le prévoit. Bien entendu, le calcul de $\epsilon'$ peut avoir été effectué en amont lors du processus décrit en relation avec la figure 6b.

Si la valeur d'erreur déterminée $\epsilon'$ est supérieure à la valeur d'erreur indiquée $\epsilon$ (test 614, sortie OK), cela signifie que le point $\hat{p}$ ou $p$ n'est pas acceptable pour effectuer une simplification du maillage : dès lors, le processus se déplace d'un nœud en direction du nœud feuille associé à l'processus (étape 615).

Sinon (test 614, sortie KO), le nœud est sélectionné / marqué comme étant acceptable pour effectuer une simplification du maillage et le processus est « terminé » (étape 616).

Si le processus arrive jusqu'à un nœud feuille, il n'est pas nécessaire de calculer $\epsilon'$ puisque, sous cette hypothèse, ce nœud feuille est alors sélectionné / marqué comme étant acceptable pour effectuer une simplification du maillage.

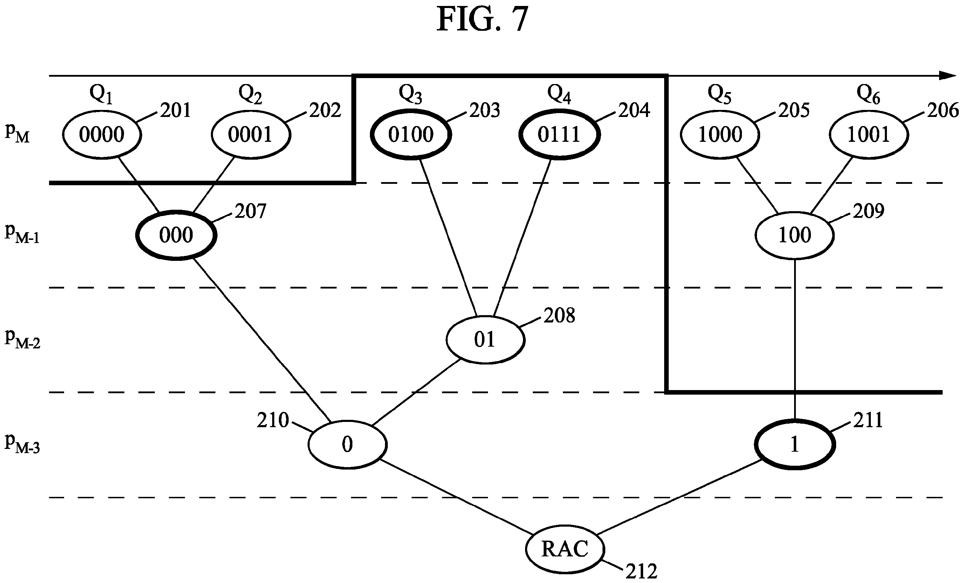

La figure 7 est un exemple d'arbre k-d dans lequel certains nœuds ont été sélectionnés pour être conservés dans le modèle simplifié.

Dans cet exemple, et après l'exécution du processus décrit en figure 6, les nœuds 207, 203, 204 et 211 ont été sélectionnés / marqués comme étant acceptables pour effectuer une simplification du maillage.

Si une maille du modèle initial était décrite par les points associés (p) aux nœuds 202, 203 et 204, la nouvelle maille est alors décrite par les points associés ($\hat{p}$ ou $\overset{\cdot}{p}$ ou $p$) aux nœuds 207, 203 et 204. De manière générale, la nouvelle maille est décrite par les nœuds parents sélectionnés qui ont au moins un nœud feuille descendant décrivant la maille initiale.

Si une maille du modèle initial était décrite par les points associés (p) aux nœuds 201, 202 et 203, on dit que la maille est dégénérée : n'étant plus décrite que par deux points (i.e. associés aux nœuds 207 et 203), cette maille est supprimée du modèle. Cela peut arriver lorsque deux (ou plus) nœuds feuilles décrivant une même maille sont les nœuds feuilles descendants d'un même nœud parent sélectionné / marqué.

Il peut arriver de plus que certaines mailles se « retournent » lors de la simplification. Dès lors, il est possible de vérifier ce retournement en comparant la moyenne des vecteurs normaux des mailles initiales (i.e. celles qui seront remplacées) au vecteur normal de la nouvelle maille : si la direction du vecteur normal change notablement, il est possible d' « inverser » la maille finale pour assurer la cohérence du modèle.

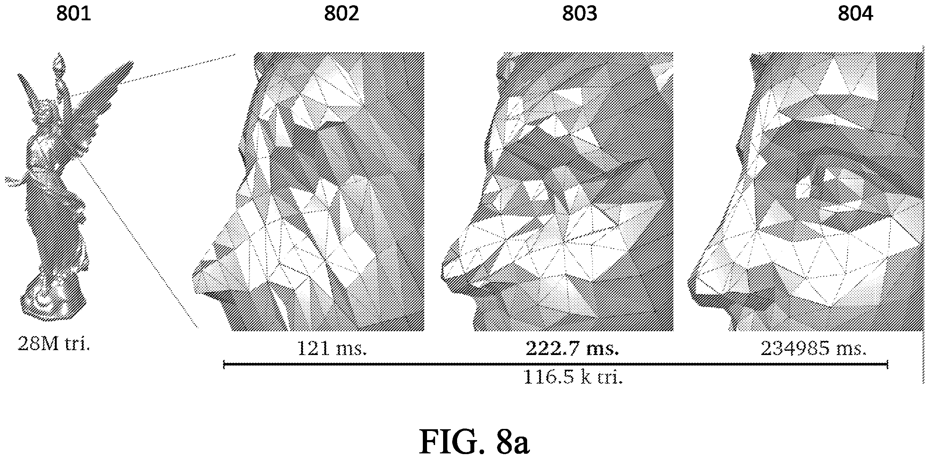

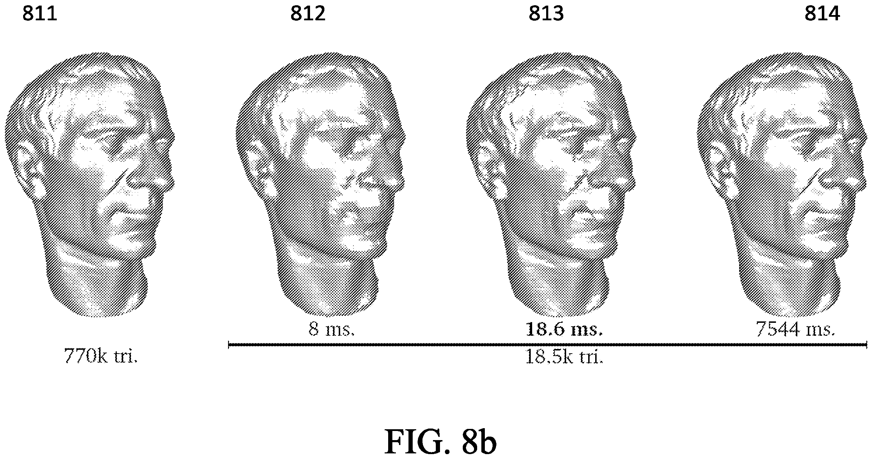

La figure 8a et la figure 8b sont des exemples de modèles simplifiés obtenus à l'aide de différents algorithmes.

À titre d'illustration, il a été testé différents algorithmes sur le modèle maillé 801 comportant 28 millions de mailles afin d'obtenir un modèle maillé simplifié possédant environ 116 milles mailles.

Le maillage 802 est un exemple de simplification effectuée avec un algorithme basé sur un partitionnement uniforme (grille) selon la méthode proposée par Decoro et Tatarchuk (Real-time mesh simplification using the gpu, 2007) en 121 ms.

Le maillage 803 est un exemple de simplification effectuée avec l'algorithme présenté ci-dessus en 222 ms.

Le maillage 804 est un exemple de simplification effectuée avec un algorithme basé sur la méthode proposée par Michael Garland et al. (1997, Surface Simplification Using Quadric Error Metrics) en 234985 ms.

On constate que la qualité de la simplification proposée par Garland est meilleure, mais que celle-ci n'est pas adaptée aux contraintes temps réels (simplification plus de 1000 fois plus lente que la simplification proposée ci-dessus).

Si la simplification proposée par Decoro et Tatarchuk est plus rapide, la qualité de la simplification est également plus basse.

Il a également été testé différents algorithmes sur le modèle maillé 811 comportant 770 mille mailles afin d'obtenir un modèle maillé simplifié possédant environ 18 mille mailles.

Le maillage 812 est un exemple de simplification effectuée avec un algorithme basé sur un partitionnement uniforme (en grille) selon la méthode proposée par Decoro et Tatarchuk en 8 ms.

Le maillage 813 est un exemple de simplification effectuée avec l'algorithme présenté ci-dessus en 18 ms.

Le maillage 814 est un exemple de simplification effectuée avec un algorithme basé sur la méthode proposée par Michael Garland et al. (1997, Surface Simplification Using Quadric Error Metrics) en 7544 ms.

La figure 9 représente un exemple de dispositif de simplification de maillage dans un mode de réalisation de l'invention.

Dans ce mode de réalisation, le dispositif comporte un ordinateur 900, comprenant une mémoire 905 pour stocker des instructions permettant la mise en œuvre du procédé, les données de mesures reçues, et des données temporaires pour réaliser les différentes étapes du procédé tel que décrit précédemment.

L'ordinateur comporte en outre un circuit 904. Ce circuit peut être, par exemple :

- un ou plusieurs processeurs apte à interpréter des instructions sous la forme de programme informatique, ou

- une carte électronique dont les étapes du procédé de l'invention sont décrites dans le silicium, ou encore

- une puce électronique programmable comme une puce FPGA (pour « Field-Programmable Gate Array » en anglais).

Cet ordinateur comporte une interface d'entrée 903 pour la réception des points du maillage, et une interface de sortie 906 pour la fourniture du maillage simplifié à un ordinateur distant par exemple 907. Enfin, l'ordinateur peut comporter, pour permettre une interaction aisée avec un utilisateur, un écran 901 et un clavier 902. Bien entendu, le clavier est facultatif, notamment dans le cadre d'un ordinateur ayant la forme d'une tablette tactile, par exemple.

Par ailleurs, le schéma fonctionnel présenté sur la figure 6 est un exemple typique d'un programme dont certaines instructions peuvent être réalisées auprès de dispositif décrit. À ce titre, la figure 6 peut correspondre à l'organigramme de l'algorithme général d'un programme informatique au sens de l'invention.

Bien entendu, la présente invention ne se limite pas aux formes de réalisation décrites ci-avant à titre d'exemple ; elle s'étend à d'autres variantes.

D'autres réalisations sont possibles.

Par exemple, il est possible, pour le calcul de l'erreur $\epsilon$' basé sur la quadrique associée au nœud, de prendre en compte également :

- une couleur associée au nœud et/ou

- la valeur d'une normale associée au nœud.

Pour ce faire, lors du processus décrit en Figure 6b (étape 607), il est possible de déterminer, pour chaque nœud feuille i, la couleur moyenne $Col_i$ des couleurs des mailles adjacentes au point associé à ce nœud feuille, cette couleur moyenne étant déterminée en pondérant les couleurs des mailles par la surface de ces mailles.

Il est également possible de calculer des couleurs moyennes intégrales $Col_i^S$ de la même manière que sont calculées les quadriques intégrales en relation avec la Figure 5.

La somme des surfaces des mailles adjacentes au point associé à ce nœud feuille est notée $A_i$. Il est également possible de calculer des surfaces intégrales $A_i^S$ de la même manière que sont calculées les quadriques intégrales en relation avec la Figure 5.

Les valeurs de $Col_i^S$ et de $A_i^S$ sont associées au nœud feuille i.

Par ailleurs, pour chaque nœud interne j de l'arbre k-d, il est possible de déterminer une valeur de couleur $Col_j$ comme étant :

$$Col_j = \frac{Col_{las}^S - Col_{ini-1}^S}{A_{las}^S - A_{ini-1}^S}$$

Lors du calcul de l'erreur $\epsilon$' de l'étape 613 de la Figure 6c, cette erreur peut être également fonction de $\delta C_j = Col_j - C_j$ avec $C_j$ la couleur moyenne des couleurs des mailles adjacentes au point associé à ce nœud dans le maillage simplifié pondéré par la somme des surfaces de ces mailles adjacentes. Il est également possible de calculer $\delta C_j$ comme

$$\delta C_j = \sqrt{\frac{Col_{las}^S{}^2 - Col_{ini-1}^S{}^2}{A_{las}^S - A_{ini-1}^S} - C_j^2}$$

étant . La valeur de $\epsilon'$ peut être une somme pondérée de l'erreur géométrique (présentée ci-dessus) et de la valeur de $\delta C_j$. La prise en compte de $\delta C_j$ permet une meilleure prise en compte de la couleur et ainsi d'éviter de supprimer des mailles dans des zones possédant une forte variation de couleurs.

Pour la prise en compte d'une normale (vecteur indiquant l'orientation du plan tangent à la surface au point, qui peut être issu d'un processus de capture/calcul/modélisation différent de celui ayant abouti à la position du point, et donner une information plus précise sur la géométrie), il est également possible d'associer à chaque nœud feuille une deuxième quadrique représentative d'une normale au point associé à ce nœud feuille. Dès lors, différents calculs sont effectués dans le processus proposé en Figure 6 de manière similaire à la quadrique évoquée précédemment et représentant les surfaces. La valeur de $\epsilon'$ peut être une somme pondérée de l'erreur géométrique (présentée ci-dessus) et/ou de la valeur de $\delta C_j$ et/ou de l'erreur sur la normale (calculée avec la deuxième quadrique représentative de la normale). La prise en compte des normales permet une meilleure préservation des détails du modèle et ainsi d'éviter de supprimer des mailles dans des zones possédant de forts détails (ex. une chevelure) mais de faibles amplitudes géométriques.

Un arbre k-d n'est qu'une représentation simple des points du maillage (accès simplifié en fonction des codes de Morton associé, parcours optimisé, facilité d'implémentation informatique, etc.). Dès lors, il est tout à fait possible de ne pas utiliser d'arbre de ce type pour la réalisation de l'invention : une approche plus globale est possible comme cela est décrit ci-dessus.

## Revendications

1. Produit programme informatique comportant des instructions pour la mise en œuvre d'un procédé de simplification d'un modèle de géométrie, lorsque ce programme est exécuté par un ou plusieurs processeurs, le procédé comprenant :

   /a/ réception dudit modèle de géométrie (601) comprenant une pluralité de points ($p_i$), chaque point de la pluralité étant associé à une mesure d'erreur *(Qi)* ;
   /b/ pour chaque point courant ($p_i$) dudit modèle de géométrie,

   - détermination (602) d'un code de Morton associé au point courant ($p_i$) en fonction de coordonnées ($Q_i$) dudit point courant ;

   - détermination (607) d'une mesure d'erreur intégrale $\left(Q_i^S\right)$ définie comme étant fonction d'une somme des mesures d'erreur associées aux points de la pluralité ayant un code de Morton associé inférieur au code de Morton associé au point courant ;

   /c/ détermination (614) si un ensemble donné de points de la pluralité peut être simplifié par un nouveau point, les points de l'ensemble donné étant tous les points de la pluralité ayant un code de Morton associé avec un même préfixe de longueur donné, en fonction au moins d'une différence entre :

   - la mesure d'erreur intégrale $\left(Q_{las}^S\right)$ déterminée pour le point de l'ensemble donné ayant le code de Morton le plus grand (las); et

   - la mesure d'erreur intégrale $\left(Q_{ini-1}^S\right)$ déterminée pour le point de la pluralité ayant un code de Morton immédiatement inférieur (ini-1) au code de Morton le plus petit parmi les codes de Morton associés aux points de l'ensemble.

2. Produit selon la revendication 1, dans lequel la mesure d'erreur ($Q_i$) associée à un point courant ($p_i$) de la pluralité est fonction d'une quadrique représentative de mailles du modèle dont au moins un des sommets est ledit point courant ou est à une distance inférieure à une distance prédéterminée dudit point courant.

3. Produit selon l'une des revendications précédentes, dans lequel la mesure d'erreur ($Q_i$) associée à un point courant ($p_i$) de la pluralité est fonction de couleur de mailles du modèle dont au moins un des sommets est ledit point courant.

4. Produit selon l'une des revendications précédentes, dans lequel la mesure d'erreur ($Q_i$) associée à un point courant ($p_i$) de la pluralité est fonction d'une quadrique représentative d'un vecteur normal associé audit point courant.

5. Produit selon l'une des revendications précédentes, dans lequel le procédé comprend en outre :

   - si un premier point de la pluralité est associé à un code de Morton identique à un deuxième point de la pluralité, suppression (604) de la pluralité de points ledit deuxième point.

6. Produit selon l'une des revendications précédentes, dans lequel ledit nouveau point est fonction (p) des points de l'ensemble.

7. Produit selon l'une des revendications précédentes, dans lequel ledit nouveau point est déterminé ($\hat{p}$) par une minimisation d'une valeur fonction de ladite différence.

8. Produit selon l'une des revendications précédentes, dans lequel le procédé comprend en outre :

   - détermination (605) d'un arbre k-d sur la base d'un codage de Morton, ledit arbre ayant comme feuilles (201, 202, 203, 204, 205, 206) ladite pluralité de points.

9. Produit selon la revendication 8, dans lequel, ledit arbre k-d possédant des nœuds internes (207, 208, 209, 210, 211), chaque nœud interne (207, 208, 209, 210, 211) est associé à un point (p),
   et dans lequel la détermination de l'étape /c/ est également fonction dudit point et d'une transposée dudit point.

10. Produit selon l'une des revendications précédentes, dans lequel la mesure d'erreur intégrale $(Q_i^S)$ pour chaque point courant est calculée comme étant fonction d'une somme :

    - de la mesure d'erreur intégrale $(Q_{i-1}^S)$ d'un point ayant un code de Morton immédiatement plus petit que le code de Morton du point courant ;
    - de la mesure d'erreur dudit point courant ($Q_i$).

11. Produit selon l'une quelconque des revendications précédentes, le modèle de géométrie étant un maillage ou un nuage de points d'un objet modélisé en trois dimensions.

12. Dispositif de simplification d'un modèle de géométrie, le dispositif comprend ;

    /a/ une interface (903) pour une réception dudit modèle de géométrie comprenant une pluralité de points, chaque point de la pluralité étant associé à une mesure d'erreur ;
    /b/ un circuit (904) adapté pour, pour chaque point courant dudit modèle de géométrie :

        - une détermination d'un code de Morton associé au point courant en fonction de coordonnées dudit point courant ;
        - une détermination d'une mesure d'erreur intégrale définie comme étant fonction d'une somme des mesures d'erreur associées aux points de la pluralité ayant un code de Morton associé inférieur au code de Morton associé au point courant ;

    /c/ un circuit (904) adapté pour une détermination si un ensemble donné de points de la pluralité peut être simplifié par un nouveau point, les points de l'ensemble donné étant tous les points de la pluralité ayant un code de Morton associé avec un même préfixe de longueur donné, en fonction au moins d'une différence entre :

        - la mesure d'erreur intégrale déterminée pour le point de l'ensemble donné ayant le code de Morton le plus grand ; et
        - la mesure d'erreur intégrale déterminée pour le point de la pluralité ayant un code de Morton immédiatement inférieur au code de Morton le plus petit parmi les codes de Morton associés aux points de l'ensemble.

**Patentansprüche**

1. Computerprogrammprodukt, das Anweisungen zur Durchführung eines Verfahrens zur Vereinfachung eines Geometriemodells aufweist, wenn dieses Programm von einem oder mehreren Prozessoren ausgeführt wird, wobei das Verfahren enthält:

/a/ Empfang des eine Vielzahl von Punkten ($p_i$) enthaltenden Geometriemodells (601), wobei jeder Punkt der Vielzahl einem Fehlermaß ($Q_i$) zugeordnet ist;
/b/ für jeden aktuellen Punkt ($p_i$) des Geometriemodells:

- Bestimmung (602) eines dem aktuellen Punkt ($p_i$) zugeordneten Morton-Codes abhängig von Koordinaten ($Q_i$) des aktuellen Punkts;
- Bestimmung (607) eines integralen Fehlermaßes $(Q_i^S)$ definiert als abhängig von einer Summe der den Punkten der Vielzahl mit einem zugeordneten Morton-Code niedriger als der dem aktuellen Punkt zugeordnete Morton-Code zugeordneten Fehlermaßen;

/c/ Bestimmung (614), ob eine gegebene Einheit von Punkten der Vielzahl durch einen neuen Punkt vereinfacht werden kann, wobei die Punkte der gegebenen Einheit alle die Punkte der Vielzahl mit einem zugeordneten Morton-Code mit einem gleichen gegebenen Präfix gegebener Länge sind, mindestens abhängig von einer Differenz zwischen:

- dem für den Punkt der gegebenen Einheit mit dem größten Morton-Code (las) bestimmten integralen Fehlermaß $(Q_{las}^S)$ ; und
- dem für den Punkt der Vielzahl mit einem nächstniedrigeren Morton-Code (ini-1) als der kleinste Morton-Code unter den den Punkten der Einheit zugeordneten Morton-Codes bestimmten integralen Fehlermaß $(Q_{ini-1}^S)$ .

**2.** Produkt nach Anspruch 1, wobei das einem aktuellen Punkt ($p_i$) der Vielzahl zugeordnete Fehlermaß ($Q_i$) von einer für Maschen des Modells repräsentativen Quadrik abhängt, von der mindestens einer der Scheitelpunkte der aktuelle Punkt ist oder in einem Abstand geringer als ein vorbestimmter Abstand vom aktuellen Punkt ist.

**3.** Produkt nach einem der vorhergehenden Ansprüche, wobei das einem aktuellen Punkt ($p_i$) der Vielzahl zugeordnete Fehlermaß ($Q_i$) von Farbe von Maschen des Modells abhängt, von denen mindestens einer der Scheitelpunkte der aktuelle Punkt ist.

**4.** Produkt nach einem der vorhergehenden Ansprüche, wobei das einem aktuellen Punkt ($p_i$) der Vielzahl zugeordnete Fehlermaß ($Q_i$) von einer Quadrik abhängt, die für einen dem aktuellen Punkt zugeordneten Normalenvektor repräsentativ ist.

**5.** Produkt nach einem der vorhergehenden Ansprüche, wobei das Verfahren außerdem enthält:

- wenn ein erster Punkt der Vielzahl einem Morton-Code gleich einem zweiten Punkt der Vielzahl zugeordnet ist, Löschen (604) des zweiten Punkts aus der Vielzahl von Punkten.

**6.** Produkt nach einem der vorhergehenden Ansprüche, wobei der neue Punkt von den Punkten der Einheit abhängt ($\acute{p}$).

**7.** Produkt nach einem der vorhergehenden Ansprüche, wobei der neue Punkt durch eine Minimierung eines Werts abhängig von der Differenz bestimmt wird (p).

**8.** Produkt nach einem der vorhergehenden Ansprüche, wobei das Verfahren außerdem enthält:

- Bestimmung (605) eines k-d-Baums auf der Basis einer Morton-Codierung, wobei der Baum die Vielzahl von Punkten als Blätter (201, 202, 203, 204, 205, 206) hat.

**9.** Produkt nach Anspruch 8, wobei, da der k-d-Baum innere Knoten (207, 208, 209, 210, 211) besitzt, jeder innere Knoten (207, 208, 209, 210, 211) einem Punkt (p) zugeordnet ist, und wobei die Bestimmung des Schritts /c/ ebenfalls von dem Punkt und einer Transponierten des Punkts abhängt.

**10.** Produkt nach einem der vorhergehenden Ansprüche, wobei das integrale Fehlermaß (Qf) für jeden aktuellen Punkt berechnet wird als abhängig von einer Summe:

- des integralen Fehlermaßes $(Q_{i-1}^S)$ eines Punkts mit einem Morton-Code nächstkleiner als der Morton-Code des aktuellen Punkts;
- des Fehlermaßes des aktuellen Punkts ($Q_i$).

**11.** Produkt nach einem der vorhergehenden Ansprüche, wobei das Geometriemodell eine Vermaschung oder eine Wolke von Punkten eines dreidimensional modellierten Objekts ist.

**12.** Vorrichtung zur Vereinfachung eines Geometriemodells, wobei die Vorrichtung enthält:

/a/ eine Schnittstelle (903) für einen Empfang des Geometriemodells, das eine Vielzahl von Punkten enthält, wobei jeder Punkt der Vielzahl einem Fehlermaß zugeordnet ist;
/b/ einen Schaltkreis (904), der für jeden aktuellen Punkt des Geometriemodells geeignet ist für:

- eine Bestimmung eines dem aktuellen Punkt zugeordneten Morton-Codes abhängig von Koordinaten des aktuellen Punkts;
- eine Bestimmung eines integralen Fehlermaßes definiert als abhängig von einer Summe der den Punkten der Vielzahl mit einem zugeordneten Morton-Code niedriger als der dem aktuellen Punkt zugeordnete Morton-Code zugeordneten Fehlermaßen;

/c/ einen Schaltkreis (904), der für eine Bestimmung geeignet ist, ob eine gegebene Einheit von Punkten der Vielzahl durch einen neuen Punkt vereinfacht werden kann, wobei die Punkte der gegebenen Einheit alle die Punkte der Vielzahl mit einem zugeordneten Morton-Code mit einem gleichen Präfix gegebener Länge sind, mindestens abhängig von einer Differenz zwischen:

- dem bestimmten integralen Fehlermaß für den Punkt der gegebenen Einheit mit dem größten Morton-Code; und
- dem bestimmten integralen Fehlermaß für den Punkt der Vielzahl mit einem Morton-Code nächstniedriger als der kleinste Morton-Code unter den den Punkten der Einheit zugeordneten Morton-Codes.

## Claims

**1.** Computer program product comprising instructions for implementing a method for simplifying a geometry model, when this program is executed by one or more processors, the method comprising:

/a/ receiving said geometry model (601) comprising a plurality of points ($p_i$), each point of the plurality being associated with an error measurement ($Q_i$);
/b/ for each current point ($p_i$) of said geometry model,

- determining (602) a Morton code associated with the current point ($p_i$) as a function of coordinates ($Q_i$) of said current point;

- determining (607) an integral error measurement ($Q_i^S$) defined as being a function of a sum of the error measurements that are associated with the points of the plurality having an associated Morton code that is lower than the Morton code associated with the current point;

/c/ determining (614) whether a given set of points of the plurality can be simplified by a new point, the points of the given set all being the points of the plurality having a Morton code associated with one and the same prefix of given length, as a function at least of a difference between:

- the integral error measurement $(Q_{las}^S)$ determined for the point of the given set having the largest Morton code (las); and

- the integral error measurement $(Q_{ini-1}^S)$ determined for the point of the plurality having a Morton code (ini-1) that is immediately lower than the smallest Morton code out of the Morton codes associated with the points of the set.

2. Product according to Claim 1, wherein the error measurement ($Q_i$) associated with a current point ($p_i$) of the plurality is a function of a quadric that is representative of meshes of the model of which at least one of the vertices is said current point or is at a distance smaller than a predetermined distance from said current point.

3. Product according to either of the preceding claims, wherein the error measurement ($Q_i$) associated with a current point ($p_i$) of the plurality is a function of colour of meshes of the model of which at least one of the vertices is said current point.

4. Product according to one of the preceding claims, wherein the error measurement ($Q_i$) associated with a current point ($p_i$) of the plurality is a function of a quadric that is representative of a normal vector associated with said current point.

5. Product according to one of the preceding claims, wherein the method further comprises:

   - if a first point of the plurality is associated with a Morton code that is identical to a second point of the plurality, deleting (604) said second point from the plurality of points.

6. Product according to one of the preceding claims, wherein said new point is a function (p) of the points of the set.

7. Product according to one of the preceding claims, wherein said new point is determined (p) by minimizing a value that is a function of said difference.

8. Product according to one of the preceding claims, wherein the method further comprises:

   - determining (605) a k-d tree based on a Morton code, said tree having said plurality of points as leaves (201, 202, 203, 204, 205, 206).

9. Product according to Claim 8, wherein, said k-d tree having internal nodes (207, 208, 209, 210, 211), each internal node (207, 208, 209, 210, 211) is associated with a point (p),
   and wherein the determination in step /c/ is also a function of said point and of a transpose of said point.

10. Product according to one of the preceding claims, wherein the integral error measurement (Qf) for each current point is calculated as being a function of a sum:

    - of the integral error measurement $(Q_{i-1}^S)$ of a point having a Morton code that is immediately smaller than the Morton code of the current point;
    - of the error measurement of said current point ($Q_i$).

11. Product according to any one of the preceding claims, the geometry model being a mesh or a point cloud of an object modelled in three dimensions.

12. Device for simplifying a geometry model, the device comprising:

    /a/ an interface (903) for receiving said geometry model comprising a plurality of points, each point of the plurality being associated with an error measurement;
    /b/ a circuit (904) designed to, for each current point of said geometry model:

       - determine a Morton code associated with the current point as a function of coordinates of said current point;
       - determine an integral error measurement defined as being a function of a sum of the error measurements that are associated with the points of the plurality having an associated Morton code that is lower than the Morton code associated with the current point;

    /c/ a circuit (904) designed to determine whether a given set of points of the plurality can be simplified by a new point, the points of the given set all being the points of the plurality having a Morton code associated with one and the same prefix of given length, as a function at least of a difference between:

- the integral error measurement determined for the point of the given set having the largest Morton code; and
- the integral error measurement determined for the point of the plurality having a Morton code that is immediately lower than the smallest Morton code out of the Morton codes associated with the points of the set.

FIG. 1a

FIG. 1b

# FIG. 2

FIG. 3

FIG. 4

FIG. 9

# FIG. 5

$Q_0^s = 0$    $Q_1^s = Q_1$    $Q_2^s = Q_1^s + Q_2$    $Q_3^s = Q_2^s + Q_3$    $Q_4^s = Q_3^s + Q_4$    $Q_5^s = Q_4^s + Q_5$    $Q_6^s = Q_5^s + Q_6$

$p_M$

$Q_1$ — 0000 — 201
$Q_2$ — 0001 — 202
$Q_3$ — 0100 — 203
$Q_4$ — 0111 — 204
$Q_5$ — 1000 — 205
$Q_6$ — 1001 — 206

$p_{M-1}$

000 — 207    $Q_2^s - Q_0^s$
100 — 209    $Q_6^s - Q_4^s$

$p_{M-2}$

01 — 208    $Q_4^s - Q_2^s$

$p_{M-3}$

210 — 0    $Q_4^s - Q_0^s$
1 — 211    $Q_6^s - Q_4^s$

RAC — 212

EP 3 292 541 B1

601 $\{p_1, p_2, ..., p_N\}$

FIG. 6a

602 CALC_MORT $\quad$ i

603 SORT_COD

604 DE_DUPLI

605 CREA_ARBR

606 kd-tree

FIG. 6b

606 kd-tree

607 $Q_i^s = Q_i + Q_{i-1}^s$
$p = p_i$ $\quad$ i

608 $Q = Q_{las}^s - Q_{ini-1}^s$
$p = p^-$ $\quad$ $w = las-ini+1$ $\quad$ j

609 kd-tree

$\varepsilon$ — 610

611 — INIT_ALG ← kd-tree — 609

$612_1$ — $p_1$ ... $p_i$ ... $p_N$ — $612_N$

$612_i$

613 — DET_ERR
$\varepsilon' = p^T Q p$

614 — $\varepsilon' > \varepsilon$ ?

OK — REMON — 615

KO

616 — MARK_NODE

## FIG. 6c

FIG. 7

EP 3 292 541 B1

801          802          803          804

28M tri.       121 ms.       **222.7 ms.**       234985 ms.

116.5 k tri.

# FIG. 8a

EP 3 292 541 B1

811                    812                    813                    814

770k tri.        8 ms.        18.6 ms.        7544 ms.
                          18.5k tri.

FIG. 8b

EP 3 292 541 B1

**Documents brevets cités dans la description**

- US 2009109219 A1, DECORO CHRISTOPHER
- EP 2533213 A2

**Littérature non-brevet citée dans la description**

- **HOPPE et al.** *Mesh optimization,* 1993
- **GARLAND et al.** *Surface simplification using quadrics error metrics,* 1997
- **LINDSTROM et al.** *Out-of-core simplification of large polygonal models,* 2000
- **COHEN-STREINER et al.** *Variational Shape approximation,* 2004
- **MICHAEL GARLAND et al.** *Surface Simplification Using Quadric Error Metrics,* 1997
- **DECORO.** Real-time mesh simplification using the gpu. *Tatarchuk,* 2007, 121
- **MICHAEL GARLAND et al.** *Surface Simplification Using Quadric Error Metrics,* 1997, 234985
- **MICHAEL GARLAND et al.** *Surface Simplification Using Quadric Error Metrics,* 1997, 7544